# FASCICULE DE BREVET EUROPEEN

(11) **EP 3 409 999 B1**
(45) Date de publication et mention de la délivrance du brevet: **18.12.2019**
(21) Numéro de dépôt: 18167431.8
(22) Date de dépôt: 16.04.2018
(51) Int. Cl.: F17C 13/04

(54) **ROBINET, STOCKAGE ET STATION DE REMPLISSAGE**
HAHN, TANK UND FÜLLSTATION
VALVE, STORE AND FILLING STATION

(30) Priorité: 01.06.2017 FR 1754871
(43) Date de publication de la demande: 05.12.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LACOMBE, Yves, 38113 VEUREY-VOROIZE (FR); OTT, Thierry, 91800 BRUNOY (FR); ZANOTO, Adrien, 75008 PARIS (FR)
(74) Mandataire: De Cuenca, Emmanuel Jaime

(56) Documents cités:
- EP-A1- 1 855 048
- WO-A1-2009/101350
- DE-A1-102016 008 059
- FR-A1- 2 927 979
- FR-A1- 2 988 157
- FR-A1- 3 018 580

## Description

L'invention concerne un robinet, un stockage de gaz sous pression et une station de remplissage correspondante.

L'invention concerne plus particulièrement un robinet pour stockage de fluide sous pression, notamment d'hydrogène gazeux, comprenant un corps abritant un circuit de fluide comprenant une première extrémité destinée à être raccordé avec l'orifice d'au moins un stockage de fluide sous pression, au moins une seconde extrémité de soutirage destinée être raccordée à un circuit récepteur pour permettre la fourniture de fluide soutiré du stockage via le circuit, au moins une troisième extrémité de remplissage destinée à être raccordée à une source de gaz sous pression pour permettre le remplissage du stockage via le circuit, les seconde et troisième extrémités étant reliées à la première extrémité via respectivement une branche de soutirage du circuit et une branche de remplissage du circuit, les branches de soutirage et de remplissage étant raccordées en parallèles à la première extrémité du circuit et comprenant chacune un ensemble de vanne(s) et/ou clapets.

L'invention concerne en particulier un robinet à haute pression, notamment pour les applications hydrogène (réservoir(s) et stations mobiles ou fixes).

FR2927979A1 divulgue un tel robinet.

De nombreux robinets et stations correspondantes on été proposés pour ces applications. Ces solutions connues ne permettent cependant pas d'optimiser les performances de remplissage et de distribution tout en offrant une modularité des usages.

En particulier, les solutions connues ne permettent pas de garantir à la fois une grande modularité des stockages utilisés dans les stations de remplissage (utilisés notamment par équilibrage de pression et/ou comme source d'un compresseur) et une bonne étanchéité du circuit, notamment en cas d'utilisation bidirectionnelle (flux de gaz en remplissage et en soutirage).

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que les branches de soutirage et de remplissage comprennent chacune une vanne respective en série avec un clapet unidirectionnel, les deux clapets unidirectionnels des deux branches étant de sens opposés, respectivement sens de remplissage et sens de soutirage.

Par ailleurs, des modes de réalisation de l'invention peuvent comporter l'une ou plusieurs des caractéristiques suivantes :
- les branches de soutirage et de remplissage comprennent chacune une vanne en série avec un clapet anti-retour,
- la vanne de chacune des branches de soutirage et de remplissage est une vanne pilotée, notamment de type pneumatique,
- le circuit comporte une première vanne d'isolation située entre d'une part, les deux branches de soutirage et de remplissage et, d'autre part, la première extrémité du circuit,
- le robinet comporte au moins un organe de vidange de sécurité configuré pour libérer un passage d'évacuation du gaz entre la première extrémité du circuit et au moins un orifice d'évacuation débouchant sur corps lorsque l'organe de vidange est soumis à une température et/ou une pression supérieure à un seuil déterminé,
- le circuit comprend une conduite de purge ayant une extrémité amont reliée dans la portion située entre la première vanne d'isolation et les deux branches de soutirage et de remplissage et une extrémité aval reliée à le ou les orifices d'évacuation de l'organe de vidange, la conduite de purge comprenant une seconde vanne d'isolation,
- le circuit comporte au moins un parmi : un capteur de pression, un capteur de température,
- le robinet comporte deux extrémités de soutirage distinctes débouchant sur le corps du robinet et reliées fluidiquement à la branche de soutirage,
- le robinet comporte deux extrémités de remplissage distinctes débouchant sur le corps du robinet et reliées fluidiquement à la branche de remplissage,
- le circuit du robinet comporte un capteur de pression situé entre la première vanne d'isolation et la première extrémité du circuit et/ou entre la première vanne d'isolation et la seconde vanne d'isolation,
- le circuit du robinet comporte au moins un capteur de pression situé entre la première vanne d'isolation et la première extrémité du circuit,
- le au moins un stockage contient du gaz à une pression comprise entre 50 et 1100bar.

L'invention concerne également un ou des stockages de gaz sous pression comprenant un orifice raccordé à un robinet selon l'une quelconque des caractéristiques ci-dessus ou ci-dessous.

L'invention concerne également une station de remplissage de réservoir(s) de gaz sous pression comprenant au moins un tel stockage de gaz sous pression relié à une conduite de transfert destinée à être raccordée à un réservoir de gaz sous pression à remplir pour assurer un transfert de gaz du stockage vers le réservoir, la conduite de transfert étant raccordée à la au moins une seconde extrémité de soutirage du corps du robinet du stockage.

Selon d'autres particularités possibles :
- la au moins troisième extrémité de remplissage du corps du robinet du stockage est reliée à une source de gaz sous pression comprenant au moins l'un parmi : un compresseur, un réserve de gaz et/ou de liquide,
- la station comprend plusieurs stockages de gaz sous pression reliés à la conduite de transfert, lesdits stockages étant conformes aux caractéristiques ci-dessus ou ci-après, au moins une partie des stockages étant reliés en parallèle à la conduite de transfert via la au moins une seconde extrémité de soutirage du circuit de chacun des stockages,
- au moins une partie des stockages sont reliés en parallèle à la source de gaz sous pression via la au moins une troisième extrémité de remplissage du circuit de chaque stockage,
- le stockage est conforme à l'une quelconque des caractéristiques ci-dessus ou ci-après, les stockages étant reliés en parallèle à une conduite d'évacuation de gaz via le au moins un orifice d'évacuation du circuit de chacun des stockages,

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue schématique et partielle illustrant un exemple de stockage comprenant un robinet selon un exemple de réalisation de l'invention,
- la figure 2 représente une vue schématique et partielle illustrant un exemple de station de remplissage comprenant un ensemble de stockages selon l'invention,
- la figure 3 représente une vue schématique et partielle illustrant un autre exemple de station de remplissage comprenant un ensemble de stockages selon l'invention.

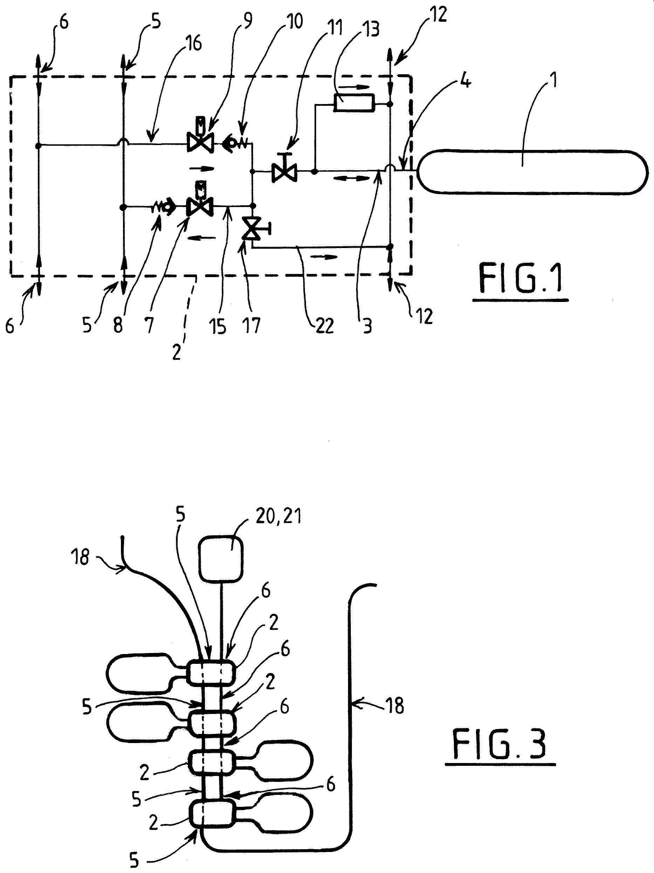

Le robinet illustré à la figure 1 est raccordé à l'orifice (de préférence unique) d'un stockage de fluide sous pression, notamment un stockage d'hydrogène gazeux sous pression, par exemple jusqu'à 1100bar (structure de stockage métallique ou composite par exemple).

Le robinet comprend un corps 2 abritant un circuit 3 de fluide comprenant une première extrémité 4 raccordé à l'orifice du stockage 1. Par exemple, la première extrémité 4 du robinet débouche au niveau d'une portion filetée destinée à être vissée dans l'orifice taraudé du stockage 1. Bien entendu, en variante, cette première extrémité pourrait être reliée à un ensemble de stockages distincts (un cadre de bouteilles par exemple). C'est-à-dire que le robinet serait commun à plusieurs stockages et relié à ces derniers par une circuiterie.

Le circuit 3 de fluide du robinet comprend au moins une seconde extrémité 5 de soutirage destinée être raccordée à un circuit récepteur pour permettre la fourniture de fluide soutiré du stockage 1. Comme décrit plus en détail ci-après, dans l'exemple non limitatif illustré à la figure 1, le circuit 3 peut comprendre deux secondes extrémités 5 de soutirage distinctes qui débouchent sur le corps 2 du robinet.

La au moins une seconde extrémité 5 de soutirage débouche sur le corps 2 par exemple au niveau d'un raccord fluidique standard ou non.

Le circuit 3 comprend également au moins une troisième extrémité 6 de remplissage destinée à être raccordée à une source de gaz sous pression pour permettre le remplissage du stockage 1. Comme précédemment, deux extrémités 6 de remplissage peuvent déboucher sur le corps 2 (par exemple au niveau de raccords fluidiques respectifs standards ou non).

Les seconde 5 et troisième 6 extrémités sont ainsi distincte et reliées à la première extrémité 4 via des branches respectives du circuit 3: respectivement une branche 15 de soutirage et une branche 16 de remplissage. C'est-à-dire que, pour le remplissage et le soutirage du stockage 1, le fluide emprunte des orifices du robinet distincts (entrée et sortie indépendantes) avant d'emprunter une portion de circuit commune (les deux branches 15, 16 se raccordant avant ou au niveau de la première extrémité 4 du circuit 3).

C'est-à-dire que les branches de soutirage 15 et de remplissage 16 sont raccordées en parallèles à la première extrémité 4. Ces branches de soutirage 15 et de remplissage 16 comprennent chacune un ensemble de vanne(s) et/ou clapets. Plus précisément, chaque branches de soutirage 15 et de remplissage 16 comprend une vanne 7, 9 respective en série avec un clapet 8, 10 unidirectionnel respectif. Ces clapets 8, 10 unidirectionnelles sont de sens opposés (autorisant l'écoulement de gaz uniquement vers le stockage 1 dans la branche 16 de remplissage et autorisant l'écoulement de gaz uniquement vers la au moins une seconde extrémité dans la branche 15 de soutirage).

Chaque vanne 7, 9 est par exemple une vanne piloté, notamment une vanne pneumatique. Bien entendu tout autre type de vanne peut être envisagé (manuelle, électrovanne, hydraulique....).

Chaque clapet 8, 10 unidirectionnel respectif est par exemple un clapet anti-retour (obturateur mobile associé avec un organe de rappel qui ne peut s'ouvrir par différentiel de pression que dans un sens (sens de remplissage ou de soutirage respectivement).

Comme détaillé ci-après, cette architecture permet d'intégrer un tel stockage 1 à un circuit d'une station de remplissage en garantissant une bonne étanchéité en cas d'utilisation bidirectionnelle (remplissage/soutirage du stockage 1). En particulier, cette architecture permet de garantir l'étanchéité des vannes 7, 9 qui fonctionnent de façon unidirectionnelle et non bidirectionnelle.

Ceci permet également de décorréler la pressurisation de la dépressurisation du stockage 1. Ceci permet également de simplifier le montage et la maintenance d'un tel stockage 1 dans un circuit qui l'intègre.

Cette architecture permet au robinet d'avoir une pression de service élevée, par exemple 1100 bar.

Le circuit 3 du robinet comporte également de préférence une première vanne 11 d'isolation située entre d'une part, les deux branches 15, 16 de soutirage et de remplissage et, d'autre part, la première extrémité 4 du circuit 3. C'est-à-dire que la première vanne 11 d'isolation est située sur la portion du circuit 3 qui est commune aux opérations de remplissage/soutirage du stockage 1. Cette première vanne 1 d'isolation peut être manuelle et/ou pilotée.

Le robinet comporte également de préférence un organe 13 de vidange de sécurité configuré pour libérer un passage d'évacuation du gaz du stockage 1 lorsqu'il est soumis à une température et/ou une pression supérieure à un seuil déterminé. Cet organe 13 optionnel est par exemple un fusible qui libère un passage (normalement obturé) entre la première extrémité 4 du circuit 3 et au moins un orifice 12 d'évacuation débouchant sur corps 2 (par exemple deux orifices 12 d'évacuation tel que représenté).

Le circuit 3 peut comprendre également une conduite 22 de purge ayant une extrémité amont reliée entre la première vanne 11 d'isolation et les deux branches 15, 16 de soutirage et de remplissage et une extrémité aval reliée à le ou les orifices 12 d'évacuation de l'organe 13 de vidange. Cette conduite 22 de purge comprend par exemple une seconde vanne 17 d'isolation (manuelle et/ou pilotée). L'ouverture de la seconde vanne 17 d'isolation permet ainsi d'évacuer par le ou les orifices 12 d'évacuation le gaz sous pression situé entre la première vanne 11 d'isolation et les deux branches 15, 16 de remplissage/soutirage. Le ou les orifices 12 d'évacuation peuvent être reliés à l'atmosphère et/ou à un volume de récupération du gaz. Cette conduite de purge peut être utilisée pour vider le stockage.

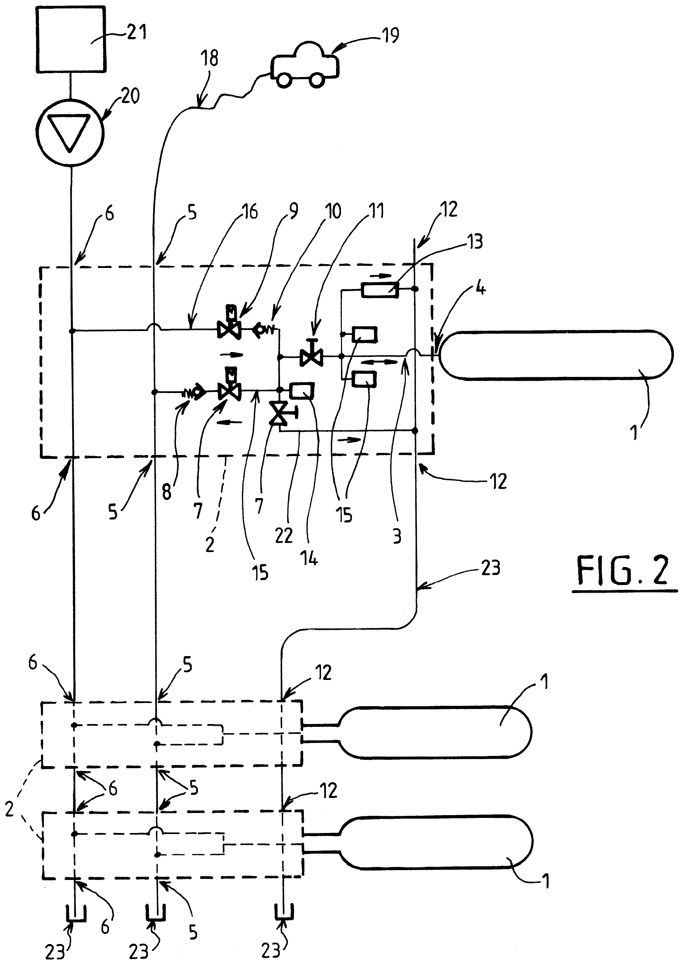

Comme illustré à la figure 2, le circuit 3 peut comporter également au moins un parmi : un capteur 14 de pression, un capteur 15 de température. Par exemple, le circuit 3 du robinet peut comporter un capteur 14 de pression situé entre la première vanne 11 d'isolation et la première extrémité 4 du circuit 3, par exemple entre la première vanne 11 d'isolation et la seconde vanne 17 d'isolation.

De même, le circuit 3 du robinet peut comporter au moins un capteur 15 de pression situé entre la première vanne 11 d'isolation et la première extrémité 4 du circuit 3.

Selon une particularité possible avantageuse, le circuit 3 comporte de préférence deux extrémités 6 de remplissage distinctes débouchant sur le corps 2 du robinet et reliées fluidiquement à la branche 16 de remplissage. C'est-à-dire que les deux extrémités 6 de remplissage distinctes peuvent communiquer fluidiquement entre elles et avec la branche 16 de remplissage.

De même, le circuit 3 peut comporter deux extrémités 5 de soutirage distinctes débouchant sur le corps 2 du robinet et reliées fluidiquement à la branche 15 de soutirage. C'est-à-dire que les deux extrémités 5 de soutirage distinctes peuvent communiquer fluidiquement entre elles et avec la branche 15 de soutirage.

Cette architecture de robinet permet d'utiliser de façon avantageuse un tel stockage dans une installation de gaz, notamment dans une station de remplissage de réservoir(s) notamment d'hydrogène. En particulier (cf. figure 2), une troisième extrémité 6 de remplissage du corps 2 du robinet du stockage 1 peut être reliée à une source 20, 21 de gaz sous pression (comprenant par exemple au moins l'un parmi : un compresseur 20, un réserve 21 de gaz et/ou de liquide...) pour permettre le remplissage du stockage 1 par le gaz fourni par la source 20, 21.

Comme illustré à la figure 2, une station de remplissage de réservoir(s) 19 peut notamment utiliser plusieurs stockages 1 conformes à la figure 1 comme stockages tampon utilisés pour transférer du gaz dans un réservoir 19 par équilibrage de pression (en cascade notamment) et/ou comme source de gaz pour un compresseur de remplissage.

La station illustrée à la figure 2 comprenant plusieurs stockages 1 (trois dans cet exemple, mais pourraient être au nombre de deux ou plus de trois). Les stockages 1 sont reliés en parallèle à la conduite 18 de transfert via la au moins une seconde extrémité 5 de soutirage du robinet de chacun des stockages 1.

Plus précisément, un premier stockage 1 (à l'extrémité supérieure de la figure 2) comporte une seconde 5 extrémité de soutirage qui est reliée directement au(x) réservoir(s) 19 à remplir (via la conduite 18). L'autre extrémité 5 de remplissage de ce premier stockage 1 est reliée à une extrémité 5 de soutirage du second stockage 1 adjacent. L'autre extrémité 5 de remplissage de ce second stockage 1 est reliée à une extrémité 5 de soutirage du troisième stockage 1 adjacent.

Bien entendu, les extrémités 5 (raccords) de soutirage de tous les stockages 1 ne sont pas nécessairement tous connectées/reliées entre eux à une même conduite 18 de soutirage, Ceci permet d'avoir un distributeur multiple de gaz avec une même source de gaz. Par exemple, l'installation peut comporter deux (ou plus) groupes de stockages reliés respectivement à deux (ou plus) conduites 18 de transfert distinctes. Tous ces stockages 1 peuvent en revanche être reliés à la même source (ou des sources distinctes) via leurs extrémités 6 de soutirages. Dans le cas par exemple de quatre stockages 1 reliés à deux conduites 18 de transfert, les extrémités 5 de soutirage de deux stockages 1 peuvent être reliés en parallèle à une première conduite 18 de transfert tandis que les extrémités 5 de soutirage des deux autres stockages 1 sont reliées en parallèle à l'autre conduite 18 de transfert. Les quatre stockages peuvent être reliés à la même source 20, 21 via les extrémités 6 de remplissage. Cf. figure 3.

De même, le premier stockage 1 (à l'extrémité supérieure de la figure 2) comporte une 6 extrémité de remplissage reliée (directement, c'est-à-dire au plus près) à la source 20, 21 de gaz sous pression tandis que l'autre extrémité 6 de remplissage de ce premier stockage 1 est reliée à une extrémité 6 de remplissage du robinet du second stockage 1 adjacent. L'autre 6 de remplissage de ce second stockage 1 est reliée une extrémité 6 de remplissage du robinet du troisième stockage 1.

Enfin les orifices 12 d'évacuation des trois stockages peuvent être reliés à la même conduite 23 de purge.

Ainsi, les extrémités/orifices 5, 6, 12 des robinets des stockages sont raccordés en parallèle respectivement
- à la conduite 18 de transfert et
- à la source 20, 21 de gaz,
- à la conduite 23 de purge.

Comme précédemment, les extrémités de soutirage de tous les réservoirs ne sont pas forcément reliées/connectées toutes entre elles mais peuvent être groupées/reliées à des conduites 18 de transfert distinctes.

Les extrémités/orifices du robinet du dernier stockage 1 (le plus éloigné, en bout de rangée, à l'extrémité inférieure de la figure 2) peuvent être obturés par un système de bouchons 23 par exemple.

Ainsi, chaque robinet associé à son stockage 1 possède un système de double orifices/sorties 5, 6, 12 permettant une double connexion qui simplifie les interconnexions entre les stockages et le reste de la station.

De cette façon il est relativement aisé de rajouter un stockage 1 en parallèle ou de retirer un stockage à une extrémité de cette rangée de stockages 1. Les coûts liés au raccordement des tels stockages 1 peuvent être minimisés.

Cette architecture permet de remplir un stockage 1 pendant qu'un autre distribue du gaz à un réservoir 22. Ceci permet d'avoir plusieurs bornes de distributions indépendantes de la source (compresseur 20).

Cette architecture permet en particulier d'utiliser les stockages 1 en parallèle selon le principe de la cascade (sans être limité sur le nombre de stockages1) pour optimiser la quantité de gaz stockée dans ces stockages (par exemple environ 30% en volume d'hydrogène résiduelle).

Cette architecture limite le nombre de raccord tout en permettant une grande modularité.

De plus cette architecture permet d'utiliser un ou plusieurs stockages 1 pour remplir un ou plusieurs autres stockages 1 de l'installation (par exemple par équilibrage et le cas échéant à partir de la source 20, 21).

Ceci permet notamment une montée graduelle de la capacité journalière de la station. Ceci permet également d'augmenter le nombre d'étape de cascade le cas échéant.

Chaque stockage 1 associé à son robinet permet de remplacer le cas échéant un ensemble de plusieurs stockages selon l'art antérieur tout en simplifiant l'installation et la maintenance. Ceci permet d'optimiser un remplissage par cascade en utilisant 60 à 70% de sa capacité (au lieu de 30% selon les solutions antérieures). Un ou des stockages 1 peuvent être utilisés également pour remplir un ou des autres stockages 1 (le cas échant via un compresseur).

Lorsque le robinet d'un stockage 1 comprend un capteur de pression (et éventuellement un capteur de température) du gaz dans le circuit 3 la quantité de gaz soutirée de chaque stockage 1 (ou remplie) peut être calculée par une équation d'état du gaz (PV=z.n.R.T par exemple).

Ceci peut remplacer ou suppléer une mesure par débitmètre massique.

## Revendications

1. Robinet pour stockage de fluide sous pression, notamment d'hydrogène gazeux, comprenant un corps (2) abritant un circuit (3) de fluide comprenant une première extrémité (4) destinée à être raccordé avec l'orifice d'au moins un stockage (1) de fluide sous pression, au moins une seconde extrémité (5) de soutirage destinée être raccordée à un circuit récepteur pour permettre la fourniture de fluide soutiré du stockage via le circuit (3), au moins une troisième extrémité (6) de remplissage destinée à être raccordée à une source de gaz sous pression pour permettre le remplissage du stockage (1) via le circuit (3), les seconde (5) et troisième (6) extrémités étant reliées à la première extrémité (4) via respectivement une branche (15) de soutirage du circuit (3) et une branche (16) de remplissage du circuit (3), les branches de soutirage (15) et de remplissage (16) étant raccordées en parallèles à la première extrémité (4) du circuit et comprenant chacune un ensemble de vanne(s) et/ou clapets, **caractérisé en ce que** les branches de soutirage (15) et de remplissage (16) comprennent chacune une vanne (7, 9) respective en série avec un clapet (8, 10) unidirectionnel respectif, et **en ce que** les deux clapets (8, 10) unidirectionnels des deux branches (15, 16) sont de sens opposés, respectivement sens de remplissage et sens de soutirage.

2. Robinet selon la revendication 1, **caractérisé en ce que** les branches de soutirage (15) et de remplissage (16) comprennent chacune une vanne (7, 9) en série avec un clapet (8, 10) anti-retour.

3. Robinet selon la revendication 2, **caractérisé en ce que** la vanne de chacune des branches de soutirage (15) et de remplissage (16) est une vanne pilotée, notamment de type pneumatique.

4. Robinet selon l'une quelconque des revendications 1 à 3, **caractérisé en ce que** le circuit (3) comporte une première vanne (11) d'isolation située entre d'une part, les deux branches (15, 16) de soutirage et de remplissage et, d'autre part, la première extrémité (4) du circuit (3).

5. Robinet selon l'une quelconque des revendications 1 à 4, **caractérisé en ce qu'**il comporte au moins un organe (13) de vidange de sécurité configuré pour libérer un passage d'évacuation du gaz entre la première extrémité (4) du circuit (3) et au moins un orifice (12) d'évacuation débouchant sur corps (2) lorsque l'organe de vidange (13) est soumis à une température et/ou une pression supérieure à un seuil déterminé.

6. Robinet selon les revendications 4 et 5 prises en combinaison, **caractérisé en ce que** le circuit (3) comprend une conduite (22) de purge ayant une extrémité amont reliée dans la portion située entre la première vanne (11) d'isolation et les deux branches (15, 16) de soutirage et de remplissage et une extrémité aval reliée à le ou les orifices (12) d'évacuation de l'organe (13) de vidange, la conduite (22) de purge comprenant une seconde vanne (17) d'isolation.

7. Robinet selon l'une quelconque des revendications 1 à 6, **caractérisé en ce que** le circuit (3) comporte au moins un parmi : un capteur (14) de pression, un capteur (15) de température.

8. Robinet selon l'une quelconque des revendications 1 à 7, **caractérisé en ce qu'**il comporte deux extrémités (5) de soutirage distinctes débouchant sur le corps (2) du robinet et reliées fluidiquement à la branche (15) de soutirage.

9. Robinet selon l'une quelconque des revendications 1 à 8, **caractérisé en ce qu'**il comporte deux extrémités (6) de remplissage distinctes débouchant sur le corps (2) du robinet et reliées fluidiquement à la branche (16) de remplissage.

10. Stockage(s) de gaz sous pression comprenant un orifice raccordé à un robinet selon l'une quelconque des revendications 1 à 9.

11. Station de remplissage de réservoir(s) de gaz sous pression comprenant au moins un stockage (1) de gaz sous pression relié à au moins une conduite (18) de transfert destinée à être raccordée à un réservoir (19) de gaz sous pression à remplir pour assurer un transfert de gaz du stockage (1) vers le réservoir (19), **caractérisé en ce que** le stockage (1) est conforme à la revendication 10 et **en ce que** la conduite (18) de transfert est raccordée à la au moins une seconde extrémité (5) de soutirage du corps (2) du robinet du stockage (1).

12. Station de remplissage selon la revendication 11, **caractérisée en ce que** la au moins troisième extrémité (6) de remplissage du corps (2) du robinet du stockage (1) est reliée à une source (20, 21) de gaz sous pression comprenant au moins l'un parmi : un compresseur (20), un réserve (21) de gaz et/ou de liquide.

13. Station de remplissage selon la revendication 11 ou 12 comprenant plusieurs stockages (1) de gaz sous pression reliés la au moins une conduite (18) de transfert, **caractérisée** en que lesdits stockages (1) sont conformes à la revendication 10 et en ce qu'au moins une partie des stockages (1) sont reliés en parallèle à la conduite (18) de transfert via la au moins une seconde extrémité (5) de soutirage du circuit (3) de chacun des stockages (1).

14. Station de remplissage selon les revendications 12 et 13 prises en combinaison, **caractérisé en ce qu'**au moins une partie des stockages (1) sont reliés en parallèle à la source (20, 21) de gaz sous pression via la au moins une troisième extrémité (6) de remplissage du circuit (3) de chaque stockage (1).

15. Station de remplissage selon l'une quelconque des revendications 13 à 14, lorsque celles-ci se rapportent aux revendications 5 ou 6, **caractérisé en ce que** les stockages (1) sont reliés en parallèle à une conduite (22) d'évacuation de gaz via le au moins un orifice (12) d'évacuation du circuit (3) de chacun des stockages (1).

## Patentansprüche

1. Schließhahn für einen Druckfluidspeicher, insbesondere von gasförmigem Wasserstoff, umfassend einen Körper (2), in dem ein Fluidkreislauf (3) untergebracht ist, umfassend ein erstes Ende (4), das dazu bestimmt ist, an die Öffnung von mindestens einem Druckfluidspeicher (1) angeschlossen zu werden, mindestens ein zweites Entnahmeende (5), das dazu bestimmt ist, an einen Empfängerkreis angeschlossen zu werden, um die Bereitstellung von Fluid zu ermöglichen, das dem Speicher über den Kreislauf (3) entnommen wird, mindestens ein drittes Füllende (6), das dazu bestimmt ist, an eine Druckgasquelle angeschlossen zu werden, um die Füllung des Speichers (1) über den Kreislauf (3) zu ermöglichen, wobei das zweite (5) und dritte (6) Ende mit dem ersten Ende (4) über jeweils einen Entnahmezweig (15) des Kreislaufs (3) und einen Füllzweig (16) des Kreislaufs (3) verbunden sind, wobei der Entnahme- (15) und der Füllzweig (16) parallel an das erste Ende (4) des Kreislaufs angeschlossen sind und jeweils eine Anordnung von Ventil(en) und/oder Klappen umfassen, **dadurch gekennzeichnet, dass** der Entnahme- (15) und der Füllzweig (16) jeweils ein Ventil (7, 9) in Serie mit einem jeweiligen Rückschlagventil (8, 10) umfassen, und dadurch, dass die zwei Rückschlagventile (8, 10) der zwei Zweige (15, 16) in entgegengesetzte Richtungen gehen, jeweils in Füllrichtung und Entnahmerichtung.

2. Schließhahn nach Anspruch 1, **dadurch gekennzeichnet, dass** der Entnahme- (15) und der Füllzweig (16) jeweils ein Ventil (7, 9) in Serie mit einem Rückschlagventil (8, 10) umfassen.

3. Schließhahn nach Anspruch 2, **dadurch gekennzeichnet, dass** das Ventil jedes des Entnahme- (15) und des Füllzweigs (16) ein fremdgesteuertes Ventil, insbesondere pneumatischer Art, ist.

4. Schließhahn nach einem der Ansprüche 1 bis 3, **dadurch gekennzeichnet, dass** der Kreislauf (3) eine erste Absperrklappe (11) umfasst, die sich zwischen einerseits den zwei Zweigen (15, 16) zur Entnahme und zur Füllung und andererseits dem ersten Ende (4) des Kreislaufs (3) befindet.

5. Schließhahn nach einem der Ansprüche 1 bis 4, **dadurch gekennzeichnet, dass** er mindestens ein Sicherheitsablassorgan (13) umfasst, das ausgestaltet ist, einen Durchlass zum Gasauslass zwischen dem ersten Ende (4) des Kreislaufs (3) und mindestens einer Auslassöffnung (12), die in den Körper (2) mündet, freizugeben, wenn das Ablassorgan (13) einer Temperatur und/oder einem Druck ausgesetzt ist, die/der höher als ein bestimmter Grenzwert ist.

6. Schließhahn nach den Ansprüchen 4 und 5 in Kombination, **dadurch gekennzeichnet, dass** der Kreislauf (3) eine Entlüftungsleitung (22) umfasst, die ein stromaufwärtiges Ende, das in dem Abschnitt verbunden ist, der sich zwischen der ersten Absperrklappe (11) und den zwei Zweigen (15, 16) zur Entnahme und zur Füllung befindet, und ein stromabwärtiges Ende aufweist, das mit der oder den Auslassöffnungen (12) des Ablassorgans (13) verbunden ist, wobei die Entlüftungsleitung (22) eine zweite Absperrklappe (17) umfasst.

7. Schließhahn nach einem der Ansprüche 1 bis 6, **dadurch gekennzeichnet, dass** der Kreislauf (3) mindestens einen umfasst aus: einem Drucksensor (14), einem Temperatursensor (15).

8. Schließhahn nach einem der Ansprüche 1 bis 7, **dadurch gekennzeichnet, dass** er zwei verschiedene Entnahmeenden (5) umfasst, die in den Körper (2) des Schließhahns münden und mit dem Entnahmezweig (15) fluidisch verbunden sind.

9. Schließhahn nach einem der Ansprüche 1 bis 8, **dadurch gekennzeichnet, dass** er zwei verschiedene Füllenden (6) umfasst, die in den Körper (2) des Schließhahns münden und mit dem Füllzweig (16) fluidisch verbunden sind.

10. Druckgasspeicher, umfassend eine Öffnung, die an einen Schließhahn nach einem der Ansprüche 1 bis 9 angeschlossen ist.

11. Füllstation für (einen) Druckgasbehälter, umfassend mindestens einen Druckgasspeicher (1), der mit mindestens einer Transferleitung (18) verbunden ist, die dazu bestimmt ist, an einen zu füllenden Druckgasbehälter (19) angeschlossen zu werden, um einen Gastransfer vom Speicher (1) zum Behälter (19) sicherzustellen, **dadurch gekennzeichnet, dass** der Speicher (1) dem Anspruch 10 entspricht, und dadurch, dass die Transferleitung (18) an das mindestens eine zweite Entnahmeende (5) des Körpers (2) des Schließhahns des Speichers (1) angeschlossen ist.

12. Füllstation nach Anspruch 11, **dadurch gekennzeichnet, dass** das mindestens dritte Füllende (6) des Körpers (2) des Schließhahns des Speichers (1) mit einer Druckgasquelle (20, 21) verbunden ist, umfassend mindestens eines aus: einem Kompressor (20), einem Gas- und/oder Flüssigkeitslager (21).

13. Füllstation nach Anspruch 11 oder 12, umfassend mehrere Druckgasspeicher (1), die mit der mindestens einen Transferleitung (18) verbunden sind, **dadurch gekennzeichnet, dass** die Speicher (1) dem Anspruch 10 entsprechen, und dadurch, dass mindestens ein Teil der Speicher (1) parallel mit der Transferleitung (18) über das mindestens eine zweite Entnahmeende (5) des Kreislaufs (3) von jedem der Speicher (1) verbunden ist.

14. Füllstation nach den Ansprüchen 12 und 13 in Kombination, **dadurch gekennzeichnet, dass** mindestens ein Teil der Speicher (1) parallel mit der Druckgasquelle (20, 21) über das mindestens eine dritte Füllende (6) des Kreislaufs (3) von jedem Speicher (1) verbunden ist.

15. Füllstation nach einem der Ansprüche 13 bis 14, wenn sich diese auf die Ansprüche 5 oder 6 beziehen, **dadurch gekennzeichnet, dass** die Speicher (1) parallel mit einer Gasauslassleitung (22) über die mindestens eine Auslassöffnung (12) des Kreislaufs (3) von jedem der Speicher (1) verbunden sind.

## Claims

1. Tap for storing pressurised fluid, in particular hydrogen gas, comprising a body (2) housing a fluid circuit (3) comprising a first end (4) intended to be connected to the orifice of at least one pressurised fluid storage (1), at least one second drawing-off end (5) intended to be connected to a receiving circuit to make it possible to supply fluid drawn-off from the storage via the circuit (3), at least one third filling end (6) intended to be connected to a pressurised gas source to make it possible to fill the storage (1) via the circuit (3), the second (5) and third (6) ends being connected to the first end (4) via respectively a drawing-off branch (15) of the circuit (3) and a branch (16) for filling the circuit (3), the drawing-off (15) and filling (16) branches being connected in parallel to the first end (4) of the circuit and each comprising a set of valve(s), **characterised in that** the drawing-off (15) and filling (16) branches each comprise a respective valve (7, 9) in series with a respective unidirectional valve (8, 10), and **in that** the two unidirectional valves (8, 10) of the two branches (15, 16) are of opposite directions, respectively filling direction and drawing-off direction.

2. Tap according to claim 1, **characterised in that** the drawing-off (15) and filling (16) branches each comprise a valve (7, 9) in series with a check valve (8, 10).

3. Tap according to claim 2, **characterised in that** the valve of each of the drawing-off (15) and filling (16) branches is a controlled valve, in particular of the pneumatic type.

4. Tap according to any one of claims 1 to 3, **characterised in that** the circuit (3) comprises a first isolation valve (11) situated between, on the one hand, the two drawing-off and filling valves (15, 16) and, on the other hand, the first end (4) of the circuit (3).

5. Tap according to any one of claims 1 to 4, **characterised in that** it comprises at least one safety draining member (13) configured to release a gas discharge duct between the first end (4) of the circuit (3) and at least one discharge orifice (12) opening onto the body (2) when the draining member (13) is subjected to a temperature and/or a pressure greater than a determined threshold.

6. Tap according to claims 4 and 5, combined, **characterised in that** the circuit (3) comprises a drain valve (22) having an upstream end connected in the portion situated between the first isolation valve (11) and the two drawing-off and filling branches (15, 16) and a downstream end connected to the discharge orifice(s) (12) of the draining member (13), the drain valve (22) comprising a second isolation valve (17).

7. Tap according to any one of claims 1 to 6, **characterised in that** the circuit (3) comprises at least one from among: a pressure sensor (14), a temperature sensor (15).

8. Tap according to any one of claims 1 to 7, **characterised in that** it comprises two separate drawing-off ends (5) opening onto the body (2) of the tap and fluidically connected to the drawing-off branch (15).

9. Tap according to any one of claims 1 to 8, **characterised in that** it comprises two separate filling ends (6) opening onto the body (2) of the tap and fluidically connected to the filling branch (16).

10. Pressurised gas storage(s) comprising an orifice connected to a tap according to any one of claims 1 to 9.

11. Pressurised gas tank filling station comprising at least one pressurised gas storage (1) connected to at least one transfer duct (18) intended to be connected to a pressurised gas tank (19) to be filled to ensure a gas transfer from the storage (1) to the tank (19), **characterised in that** the storage (1) complies with claim 10 and **in that** the transfer duct (18) is connected to the at least one second drawing-off end (5) of the body (2) of the tap of the storage (1).

12. Filling station according to claim 11, **characterised in that** the at least third filling end (6) of the body (2) of the tap of the storage (1) is connected to a pressurised gas source (20, 21) comprising at least one from among: a compressor (20), a gas and/or liquid reserve (21).

13. Filling station according to claim 11 or 12 comprising several pressurised gas storages (1) connected to the at least one transfer duct (18), **characterised in that** said storages (1) comply with claim 10, and **in that** at least some of the storages (1) are connected in parallel to the transfer duct (18) via the at least one second drawing-off end (5) of the circuit (3) of each of the storages (1).

14. Filling station according to claims 12 and 13 combined, **characterised in that** at least some of the storages (1) are connected in parallel to the pressurised gas source (20, 21) via the at least one third filling end (6) of the circuit (3) of each storage (1).

15. Filling station according to any one of claims 13 to 14, when these relate to claims 5 or 6, **characterised in that** the storages (1) are connected in parallel to a gas discharge duct (22) via the at least one discharge orifice (12) of the circuit (3) of each of the storages (1).
